# EUROPÄISCHE PATENTANMELDUNG

(11) **EP 0 687 026 A2**
(43) Veröffentlichungstag der Anmeldung: **13.12.1995**
(21) Anmeldenummer: 95106595.2
(22) Anmeldetag: 02.05.1995
(51) Int. Cl.: H01M 10/36, H01M 14/00

(54) **Ionenleiter für elektrochemische Speicher**

(30) Priorität: 09.06.1994 DE 4420095
(71) Anmelder: DAIMLER-BENZ AKTIENGESELLSCHAFT, D-70567 Stuttgart (DE)
(72) Erfinder: Maly-Schreiber, Martha, Dr., D-89075 Ulm (DE); Michel, Josef, Dr., D-89081 Ulm (DE)

(57) **Zusammenfassung**

Die Erfindung betrifft einen Ionenleiter für elektrochemische Speicher mit einem Alkalimetallsalz oder einem Salzgemisch aus Alkalimetallen und mit einem damit vermischten und aus wenigstens eine Phosphazen-Grundeinheit aufweisenden Oligomeren und/oder Polymeren, im folgenden vereinfachend Polymere genannt. Die Polymere sind gegenüber den Bestandteilen des Ionenleiters (Proben 1 bis 8) chemisch beständig und am Phosphor zumindest einer Phosphazen-Grundeinheit des Polymers ist ein anorganisches Atom oder eine anorganische Verbindung angeordnet. Zur Bildung des Ionenleiters werden die Alkalimetallsalze auf Schmelztemperatur erhitzt und den vorzugsweise dünnflüssig aufgeschmolzenen Alkalimetallsalzen die Polymere beigegeben, in der Alkalimetallsalz-Schmelze gelöst und mit den Alkalimetallsalzen vermischt.

## Beschreibung

Die Erfindung betrifft einen Ionenleiter für elektrochemische Speicher gemäß dem Oberbegriff des Anspruchs 1, wie er aus der EP 411 156 A1 als bekannt hervorgeht.

Die EP 411 152 A1 betrifft einen Ionenleiter, der Polyphosphazen aufweist. Das Polyphosphazen ist aus Phosphazen-Grundeinheiten gebildet, die am Phosphor einer Phosphazen-Grundeinheit organische Substituenten aufweisen. Diese Polyphosphazene weisen gegenüber den Ionen einiger Alkalimetallsalze, insbesondere gegenüber Lithium, allerdings eine unzureichende chemische Stabilität auf, so daß sie zum Einsatz in derartigen Batterien nur in geringem Umfang geeignet sind. Des weiteren zerfallen sie bei höheren Temperaturen.

Die Aufgabe der Erfindung ist es, den gattungsgemäß zugrundegelegten Ionenleiter eines elektrochemischen Speicher dahingehend weiterzuentwickeln, daß er gegenüber Ionen von Alkalimetallsalzen chemisch stabiler ist und daß er unter Normalbedingungen eine möglichst geringe Schmelztemperatur aufweist und daß er sich bei möglichst hohen Temperaturen zersetzt. Des weiteren ist ein Verfahren zur Herstellung eines derartigen Ionenleiter anzugeben.

Die Aufgabe wird bei einem gattungsgemäß zugrundegelegten Ionenleiter erfindungsgemäß mit den kennzeichnenden Merkmalen des Anspruchs 1 bzw. bezüglich des Verfahren mit einem Verfahren mit den kennzeichnenden Verfahrensschritten des Anspruchs 11 gelöst. Durch die Vermischung der Alkalimetallsalze mit wenigstens einer anorganisch substituierten Phosphazen-Grundeinheit aufweisenden Oligomeren und/oder Polymeren wird die Schmelztemperatur bzw. Glasbildungstemperatur Tg der Alkalimetallsalze des Ionenleiters bis in den Bereich der Raumtemperatur und sogar darunter gesenkt. Die Ionenleitfähigkeit der Alkalimetallsalze derartiger Ionenleiter ist bei Raumtemperatur (T_{R} = 20 °C) um bis das 1000-fach größer als die Ionenleitfähigkeit der vorbekannten Alkalimetallsalze, deren Schmelzpunkt üblicherweise oberhalb 100 °C liegt.

Hierdurch kann ein den erfindungsgemäßen Ionenleiter aufweisender elektrochemischer Speicher ohne zusätzliche Energie bereits bei Raumtemperatur und tiefer betrieben werden. Beim Betrieb erhitzt sich, bedingt durch den anliegenden Innenwiderstand des elektrochemischen Speichers der Ionenleiter, wodurch er sich erwärmt. Diese Eigenerwärmung des Ionenleiters des elektrochemischen Speichers, die zu Temperaturen des Ionenleiters und dessen Komponenten von weit über 150 °C führen kann, erhöht in bekannter Weise die Ionenleitfähigkeit der Alkalimetallsalze.

Um eine Sicherheit des elektrochemischen Speichers zu gewährleisten, werden Polymere mit Phosphazen-Grundeinheiten gewählt, die gegenüber den Alkalimetallsalzen chemisch beständig sind und die eine hohe Temperaturbeständigkeit aufweisen. Insbesondere sind hierbei Polymere mit Phosphazen-Grundeinheiten von Vorteil, die als Seitenketten am Phosphor der Phosphazen-Grundeinheit Halogene aufweisen. Bevorzugt werden in diesem Fall Di-Halogen-Phosphazene. Diese Polyphosphazene mit Halogenen in den Seitenketten, die in der Literatur als anorganische Polymere bekannt sind, sind bis zu ca. 350 °C und deren Oligomere aus drei bis sieben Phosphazen-Grundeinheiten sogar bis über 400 °C thermisch stabil, weshalb sie insbesonders für den Einsatz in Traktionsbatterien geeignet sind. Insbesondere ist der erfindungsgemäße Ionenleiter als Elektrolyt für elektrochemische Speicher mit alkalimetallhaltigen Aktivmassen, wie lithium- und natriumhaltigen Aktivmassen, geeignet. Zweckmäßiger Weise kann allerdings auch schon eine Temperaturbeständigkeit des Polymers von über 150 °C sein.

Die Herstellung eines erfindungsgemäßen Ionenleiters erfolgt sinnvollerweise dadurch, daß die Alkalimetallsalze vorzugsweise mit einem Gew.-%Anteil größer 3 Gew.-% an dem Gesamtgewicht des Endgemisches , insbesondere zwischen 20 Gew.-% und 60-Gew.%, über ihren Schmelzpunkt erhitzt und geschmolzen werden, und daß der Alkalimetallsalz-Schmelze die sich in der Alkalimetallsalz-Schmelze lösenden und sich mit den Alkalimetallsalzen vermischenden Polymere hinzugegeben werden. Die Anforderungen an das Polymer sind hierbei, daß es gegenüber den Alkalimetallsalzen chemisch beständig ist und daß das Polymer zumindest eine kunjungierte Phosphazen-Grundeinheit aufweist, an dessen Phosphor zumindest ein anorganisches Atom oder eine anorganische Verbindung angeordnet ist.

Die erfindungsgemäßen Ionenleiter haben aufgrund ihrer niedrigen Schmelztemperatur und ihrer hohen insbesondere Alkalimetall-Ionenleitfähigkeit bei Raumtemperatur ein hohes Einsatzpotential in Alkalimetall-Batterien,
- in denen geschmolzene Salze als Elektrolyt verwendet werden, z.B. Na/NiCl₂- oder AlLi/FeS₂-Batterien,
- in denen Elektrodenreaktionen als Einlagerungsreaktionen ablaufen, z.B. in Legierungen innerhalb eines Einphasengebiets für die negative Elektrode und in Form von Interkalationsverbindungen für die positive Elektrode,
- in denen gel- oder pastenartige Elektrolyte eingesetzt werden, die durch Demobilisierung des Elektrolyten mit inerten und/oder ionenleitenden festen Zusatzstoffen erzielt werden und in denen feste oder flüssige Elektroden verwendet werden und
- in denen gel- oder pastenartige Alkalimetalle eingesetzt werden, die durch Demobilisierung des Elektrolyten mit inerten und/oder ionenleitenden festen Zusatzstoffen erzielt werden und deren Elektroden als Feststoffe in bipolarer Schichtbauweise angeordnet sind.

Weitere zweckmäßige Ausgestaltungen der Erfindung sind den verbleibenden Unteransprüchen entnehmbar. Im übrigen wird die Erfindung anhand von Ausführungsbeispielen erläutert, wobei die Stoffeigenschaften der Ionenleiter in den Figuren dargestellt sind. Dabei zeigt
- Fig. 1: ein Dreieck-Diagramm von vier verschieden Proben eines erfindungsgemäßen Ionenleiters, mit der Zusammensetzung der Alkalimetallsalze des Ionenleiters und mit deren Verhältnis zu den Polymeren,
- Fig. 2: eine Darstellung der Ionenleitfähigkeit der unterschiedlichen Proben nach Figur 1 in Abhängigkeit des Reziproken der absoluten Temperatur,
- Fig. 3: eine Darstellung des Widerstandes der unterschiedlichen Proben nach Figur 1 in Abhängigkeit der Temperatur in Grad Celsius,
- Fig. 4: ein weiteres Dreieck-Diagramm von vier weiteren Proben eines erfindungsgemäßen Ionenleiters,
- Fig. 5: eine Darstellung der Ionenleitfähigkeit der unterschiedlichen Proben nach Figur 4 in Abhängigkeit des Reziproken der absoluten Temperatur und
- Fig. 6: eine Darstellung des Widerstandes der unterschiedlichen Proben nach Figur 4 in Abhängigkeit der Temperatur in Grad Celsius.

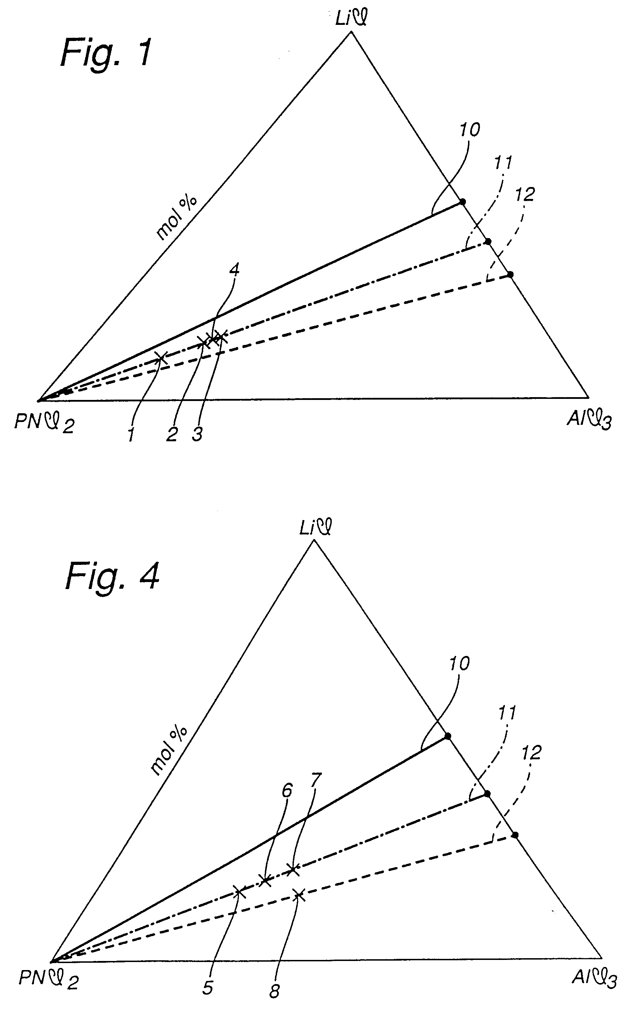

In Figur 1 ist ein Dreieck-Diagramm von vier verschieden Proben eines erfindungsgemäßen Ionenleiters (Proben 1 bis 4) dargestellt, wobei ein jeder Eckpunkt des Dreiecks den reinen Stoff darstellt. In der Fläche des Dreiecks sind drei Geraden eingezeichnet, die ein konstantes Molverhältnis der aus einem Gemisch von AlCl₃ und LiCl bestehenden Alkalimetallsalze betreffen. Die Gerade 10 weist ein stöchiometrisches Molverhältnis zwischen Al und Li auf, die Gerade 11 ein Verhältnis von 57 Mol% und die Gerade 12 ein Verhältnis von 61 Mol%. Entlang der Geraden nimmt, ausgehend von dem reinen Polyphosphazen der Anteil der Alkalimetallsalze im Bezug auf den Anteil des Di-Chlor-Polyphosphazens in dem Ionenleiter (Proben 1 bis 4) zu.

Die im Dreieck-Diagramm nach Figur 1 aufgeführten Proben des Ionenleiters (Proben 1 bis 4) weisen alle ein Al/Li-Verhältnis von 57 % zugunsten des Aluminiums auf. Änderungen ergeben sich hierbei hinsichtlich des Gewichtsanteiles der Alkalimetallsalze im Verhältnis zu dem Gewicht des gesamten Ionenleiters (Proben 1 bis 4), hier in Gewichtsprozent angegeben, in dem Verhältnis des Polyphosphazens zu dem Aluminium und in dem Verhältnis des Polyphosphazens zu dem Lithium. Die Proben 1 bis 4 weisen folgende Werte auf:

| Probe 1 | |
|---|---|
| Gewichtsprozent Alkalimetallsalz: | 40,7 |
| Molprozent Al:Li | 57 |
| Molprozent PNCl₂:Li | 2,74 |
| Molprozent PNCl₂:Al | 2,08 |

| Probe 2 | |
|---|---|
| Gewichtsprozent Alkalimetallsalz: | 49,6 |
| Molprozent Al:Li | 57 |
| Molprozent PNCl₂:Li | 2,0 |
| Molprozent PNCl₂:Al | 1,51 |

| Probe 3 | |
|---|---|
| Gewichtsprozent Alkalimetallsalz: | 55,8 |
| Molprozent Al:Li | 57 |
| Molprozent PNCl₂:Li | 1,5 |
| Molprozent PNCl₂:Al | 1,13 |

| Probe 4 | |
|---|---|
| Gewichtsprozent Alkalimetallsalz: | 51,2 |
| Molprozent Al:Li | 57 |
| Molprozent PNCl₂:Li | 1,8 |
| Molprozent PNCl₂:Al | 1,36 |

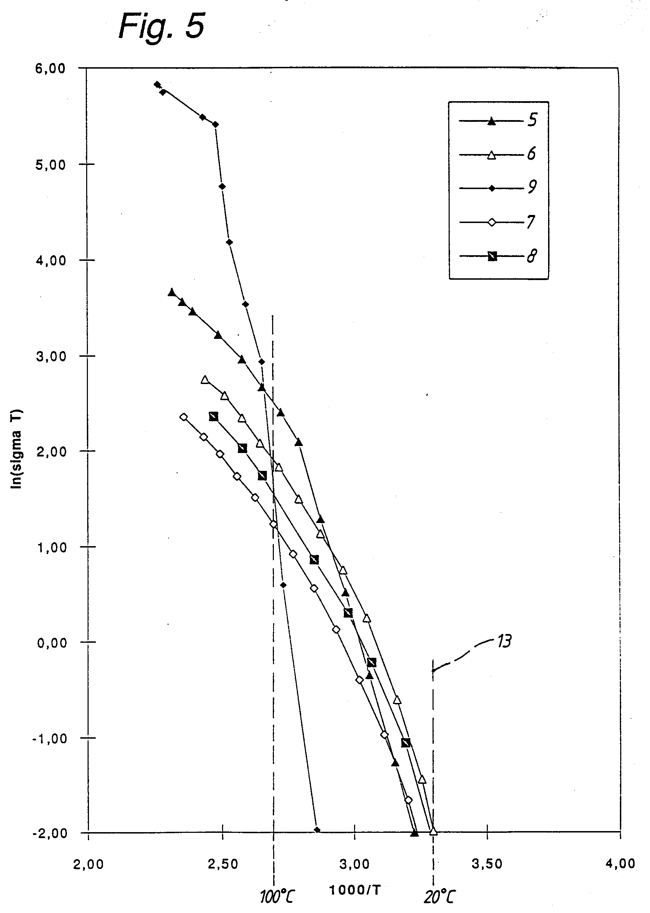

Um unnötige Wiederholungen zu vermeiden wird bei den in Figur 4 dargestellten Ionenleitern (Proben 5 bis 8) nur noch auf deren Zusammensetzung eingegangen, wobei sich bei der Probe 8 auch das Verhältnis von Al:Li ändert.

| Probe 5 | |
|---|---|
| Gewichtsprozent Alkalimetallsalz: | 54,4 |
| Molprozent Al:Li | 57 |
| Molprozent PNCl₂:Li | 1,58 |
| Molprozent PNCl₂:Al | 1,2 |

| Probe 6 | |
|---|---|
| Gewichtsprozent Alkalimetallsalz: | 45,9 |
| Molprozent Al:Li | 57 |
| Molprozent PNCl₂:Li | 2,23 |
| Molprozent PNCl₂:Al | 1,68 |

| Probe 7 | |
|---|---|
| Gewichtsprozent Alkalimetallsalz: | 37,5 |
| Molprozent Al:Li | 57 |
| Molprozent PNCl₂:Li | 3,14 |
| Molprozent PNCl₂:Al | 2,37 |

| Probe 8 | |
|---|---|
| Gewichtsprozent Alkalimetallsalz: | 40,7 |
| Molprozent Al:Li | 61,1 |
| Molprozent PNCl₂:Li | 3,14 |
| Molprozent PNCl₂:Al | 2,0 |

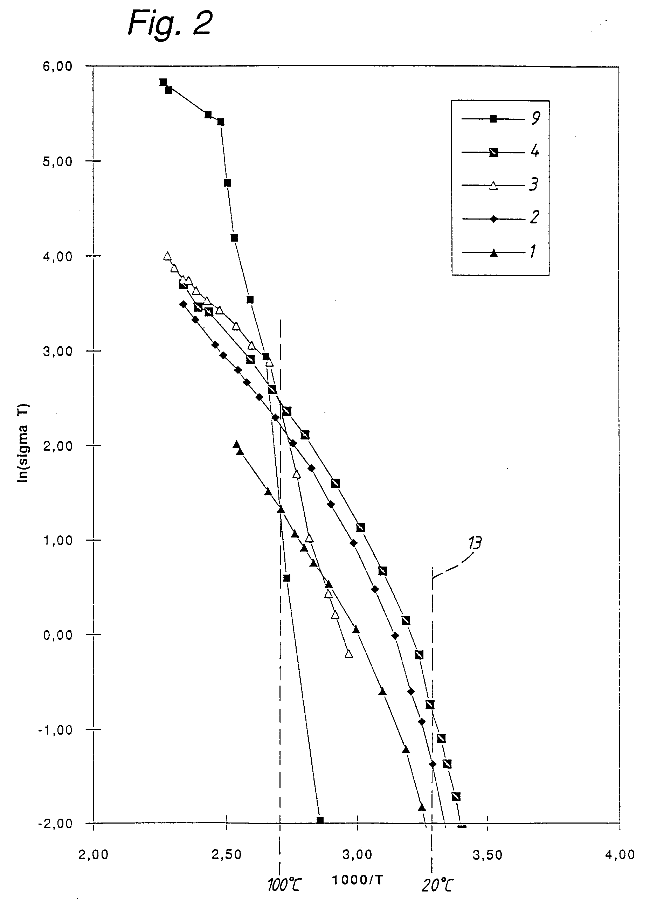

Aus den zu den Proben 1 bis 4 (Figur 2) bzw. 5 bis 8 (Figur 5) gehörigen Arrhenius-Diagrammen, bei denen der Logarithmus naturalis der spezifischen elektrischen Ionenleitfähigkeit (in Ohm pro cm) der jeweiligen Probe über dem 1000/T (in Grad Kelvin) aufgetragen ist, ist ersichtlich, daß die Ionenleiter (Proben 1 bis 8) generell bereits bei Raumtemperaturen (gestrichelte Linie 13) eine zu Betriebsbeginn des elektrochemischen Speichers ausreichende elektrische Ionenleitfähigkeit aufweisen, die weit oberhalb deren des reinen Alkalimetallsalze angeordnet ist. Mit erfindungsgemäßen Ionenleitern können je nach geometrischen Querschnitt Ionenleitfähigkeiten erreicht werden, die kleiner 10⁻⁴ Siemens pro cm sind. Gleichzeitig kann die Ionenleitfähigkeit über den Prozeß der Eigenerwärmung über den von den Ionenleitern (Proben 1 bis 8) ausgehenden Innenwiderstand um Dekaden gesteigert werden, wobei die Ionenleitfähigkeit der Ionenleiter (Proben 1 bis 8) mit der der reinen Alkalimetallsalzes im Bereich von etwa 100 °C, also im Bereich von deren Schmelzpunkt etwa übereinstimmt.

Ferner ist eine Abhängigkeit der Ionenleitfähigkeit von dem Anteil der Alkalimetallsalze in den Ionenleitern (Proben 1 bis 8) erkennbar. So ist bei einem Salzanteil an den Ionenleitern von über etwa 54 Gewichtsprozent (Probe 3 und Probe 5) die Ionenleitfähigkeit der Ionenleiter unterhalb etwa 70 °C gegenüber derjenigen von Ionenleitern mit einem Gewichtsanteil unterhalb etwa 52 Gewichtsprozent geringer, während die Ionenleitfähigkeit dieser beiden Proben oberhalb etwa 70 °C besser ist.

Dies bedeutet, daß Ionenleiter mit einem Alkalimetallsalzanteil von über etwa 54 Gew.% sich in ihrem Ionenleitfähigkeitsverhalten sehr der Ionenleitfähigkeitsverhalten der reinen Alkalimetallsalze nähern. Derartige Ionenleiter können daher für elektrochemische Speicher, die bei Raumtemperatur betriebsbereit sein sollen, gegenüber Ionenleitern mit einem Alkalimetallsalzanteil geringer 51 Gew.% weniger geeignet sein.

Allerdings weisen diese Ionenleiter bei höheren Temperaturen eine bessere Ionenleltfähigkeit auf, weshalb deren Einsatz durchaus einen Sinn haben kann. Auf jeden Fall kann ein elektrochemischer Speicher durch den Anteil des Alkalimetallsalzes in dem Ionenleiter je nach Einsatzfall gut abgestimmt werden.

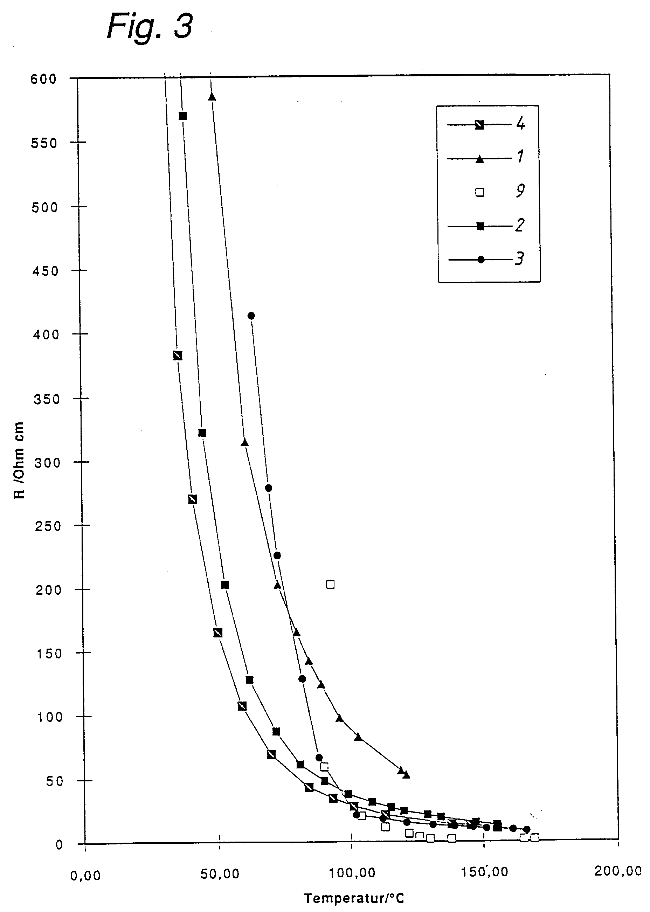

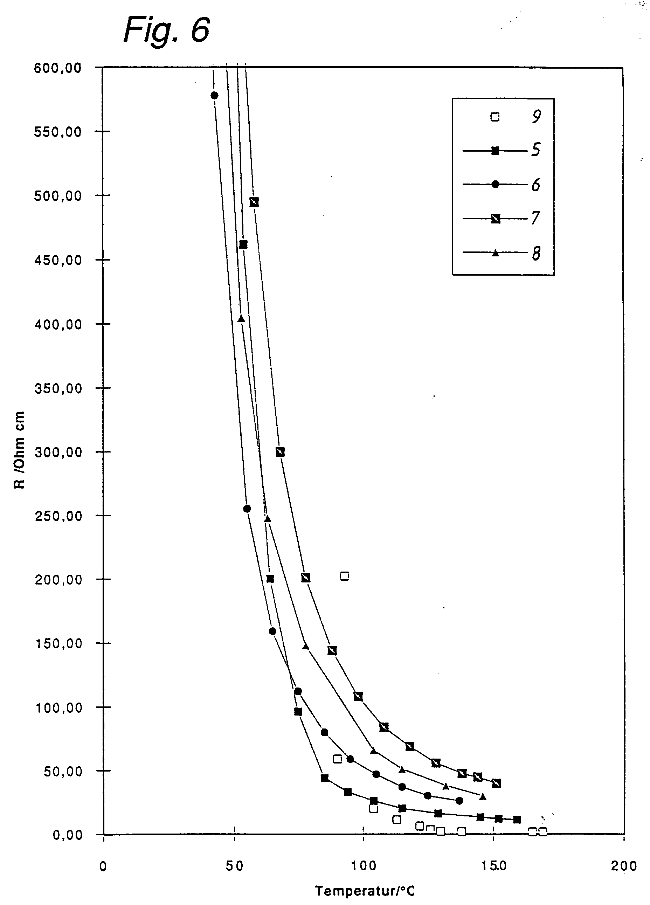

Aus den zu den Proben 1 bis 4 (Figur 3) bzw. 5 bis 8 (Figur 6) gehörigen Widerstands-Diagrammen, bei denen der elektrische Widerstand (in Ohm cm) der jeweiligen Ionenleiter (Proben 1 bis 8) über der Temperatur (in Grad Celsius) aufgetragen ist, ist ersichtlich, daß die Ionenleiter (Proben 1 bis 8) bei geringeren Temperaturen generell einen sinkenden Widerstand aufweisen, wobei die Ionenleiter (Proben 1 bis 8) auch bei höheren Temperaturen (über 120 °C) einen merklichen Widerstand zwischen 10 Ohm cm und 50 Ohm cm aufweisen.

Wie im Falle der Ionenleitfähigkeit nähert sich auch hier das Verhalten von Ionenleitern mit einem Anteil von Alkalimetallsalzen von über etwa 54 Gew.% dem entsprechenden Verhalten der reinen Alkalimetallsalze an, weshalb derartige Ionenleiter (Probe 3 und Probe 5) einen erst später sinkenden Widerstand aufweisen. Allerdings sollte der Anteil von Alkalimetallsalzen auch nicht zu gering sein, da, wie es sich anhand der Probe 7 zeigt, ansonst der Widerstand generell höher ist und auch erst später sinkt. Ist allerdings eine starke Eigenerwärmung der Ionenleiter gewünscht kann dies sogar sinnvoll sein.

Die Herstellung eines Ionenleiters wird anhand eines weiteren Ausführungsbeispieles im folgenden beschrieben. 15 g eines wasserfreien Alkalimetallsalzgemisch, bestehend aus Aluminiumchlorid und Lithiumchlorid mit 57 Mol%-Anteil Lithiumchlorid wird in trockener Atmosphäre aufgeschmolzen. Oberhalb der Salzgemisch-Schmelztemperatur wird bei 150 °C bis 170 °C der Salzschmelze Polydichloridphosphazen zugegeben. Das Polydichloridphosphazen wird durch thermische Polymerisation des Trimeren ohne Katalyse mit nachfolgender Abtrennung des noch nicht polymerisierten Eduktes oder alternativ unter Bortrichlorid-Katalyse ohne weitere Reinigung hergestellt. Bei den oben erwähnten Temperaturen wird das Endgemisch (Polyphosphazen und Alkalimetallsalzgemisch) lange gerührt, bis ein homogenes dünnflüssiges Gemisch entstanden ist. Die Dauer des Rührens beträgt hierbei je nach Mengenverhältnis in etwa zwei bis drei Tage. Zur Einstellung der Viskosität eines möglichst hochdispersiven Ionenleiters ist es zweckmäßig, der Schmelze anorganische Zusätze, insbesondere Al₂O₃, TiO₂, SiO₂ u.ä., zuzugeben.

## Patentansprüche

1. Ionenleiter für elektrochemische Speicher mit einem Alkalimetallsalz oder einem Salzgemisch aus Alkalimetallen und mit einem damit vermischten und wenigstens eine Phosphazen-Grundeinheit aufweisenden Oligomeren und/oder Polymeren, im folgenden vereinfachend Polymere genannt,
**dadurch gekennzeichnet,**
daß die Polymere gegenüber den Bestandteilen des Ionenleiters (Proben 1 bis 8) chemisch beständig sind und daß an dem Phosphor einer Phosphazen-Grundeinheit zumindest ein anorganisches Atom oder eine anorganische Verbindung angeordnet ist.

2. Ionenleiter nach Anspruch 1,
**dadurch gekennzeichnet,**
daß der Anteil der Alkalimetallsalze in dem Ionenleiter (Proben 1 bis 8), bezogen auf das gesamte Gewicht des Ionenleiters, größer als 3 Gew.-%, insbesondere größer als 20 Gew.-% und kleiner 60 Gew.-% ist.

3. Ionenleiter nach Anspruch 1,
**dadurch gekennzeichnet,**
daß der Ionenleiter (Proben 1 bis 8) folgende Anionen oder ein Gemisch folgender Anionen aufweist: BF₄⁻ und/oder AlCl₄⁻, und/oder PF₆⁻ und/oder einfach negativ ionisierte Halogene, insbesondere Chlorid und/oder Fluorid und/oder Bromid und/oder Jodid.

4. Ionenleiter nach Anspruch 1,
**dadurch gekennzeichnet,**
daß die eingesetzten ring- und/oder kettenförmigen Polymere zumindest teilweise miteinander vernetzt sind .

5. Ionenleiter nach Anspruch 1,
**dadurch gekennzeichnet,**
daß der Ionenleiter (Proben 1 bis 8) weitgehend homogen ist und daß die Polymere eine Schmelztemperatur aufweisen, die unterhalb der der entsprechenden reinen Alkalimetallsalze und/oder der des entsprechenden reinen Alkalimetallsalzgemisches angeordnet ist.

6. Ionenleiter nach Anspruch 1,
**dadurch gekennzeichnet,**
daß die Phosphazen-Grundeinheit am Phosphor zumindest ein Halogen und/oder eine Halogen-Verbindung aufweist.

7. Ionenleiter nach Anspruch 1,
**dadurch gekennzeichnet,**
daß die Phosphazen-Grundeinheit Halogen-Phosphazene, insbesondere Di-Halogen-Phosphazene sind.

8. Ionenleiter nach Anspruch 1,
**dadurch gekennzeichnet,**
daß die Phosphazen-Grundeinheit Chlor-Phosphazene, insbesondere Di-Chlor-Phosphazene sind.

9. Ionenleiter nach Anspruch 1,
**dadurch gekennzeichnet,**
daß der Ionenleiter (Proben 1 bis 8) als Elektrolytsalze ein Gemisch aus Aluminiumchlorid (AlCl₃) und Lithiumchlorid (LiCl) aufweist.

10. Ionenleiter nach Anspruch 1,
**dadurch gekennzeichnet,**
daß der Anteil der Alkalimetallsalze in dem Ionenleiter (Proben 1 bis 8) im Bezug auf das Gewicht der Endmischung des aus Polymeren und Alkalimetallsalzen gebildeten Ionenleiters (Proben 1 bis 8) zwischen 30 Gew.-% und 60 Gew.-%, insbesondere zwischen 40 Gew.-% und 54 Gew.-% beträgt.

11. Verfahren zur Herstellung eines Alkalimetallsalze und Oligomeren und/oder Polymeren, im folgenden vereinfachend Polymere genannt, die aus Phosphazen-Grundeinheiten gebildet sind, aufweisenden Ionenleiters für elektrochemische Speicher,
**dadurch gekennzeichnet,**
daß zur Bildung des Ionenleiters (Proben 1 bis 8) die Alkalimetallsalze auf Schmelztemperatur erhitzt werden und daß den vorzugsweise dünnflüssig aufgeschmolzenen Alkalimetallsalzen Polymere beigegeben werden, die in der Alkalimetallsalz-Schmelze gelöst und mit den Alkalimetallsalzen vermischt werden, wobei die Polymere gegenüber den Bestandteilen des Ionenleiters (Proben 1 bis 8) chemisch beständig sind und wobei an dem Phosphor der Phosphazen-Grundeinheit ein anorganisches Element oder eine anorganische Verbindung angeordnet ist.
